# EUROPÄISCHE PATENTANMELDUNG

(11) **EP 4 080 749 A1**
(43) Veröffentlichungstag der Anmeldung: **26.10.2022**
(21) Anmeldenummer: 22166351.1
(22) Anmeldetag: 01.04.2022
(51) Int. Cl.: H02M 1/34, H02M 7/00, H02M 7/5387

(54) **SCHALTUNGSANORDNUNG FÜR EINEN STROMRICHTER**

(30) Priorität: 21.04.2021 DE 102021203996
(71) Anmelder: Siemens Mobility GmbH, 81739 München (DE)
(72) Erfinder: Böhmer, Jürgen, 90547 Stein (DE); Krafft, Eberhard Ulrich, 90419 Nürnberg (DE); März, Andreas, 91227 Leinburg (DE); Nagel, Andreas, 90431 Nürnberg (DE); Weigel, Jan, 91077 Großenbuch (DE)

(57) **Zusammenfassung**

Die Erfindung betrifft eine Schaltungsanordnung für einen Stromrichter, wobei die Schaltungsanordnung aufweist:
- zumindest eine Halbbrücke mit jeweils zwei in Serie geschalteten Leistungshalbleiterschaltern, wobei die Halbbrücke zumindest ein Modul mit jeweils zumindest einem Leistungshalbleiterschalter aufweist, und wobei die Halbbrücke einen ersten Gleichspannungsanschluss, einen zweiten Gleichspannungsanschluss und einen Wechselspannungsanschluss aufweist,
- einen Kondensator, welcher parallel zu der Halbbrücke geschaltet ist und einen ersten Kondensatoranschluss und einen zweiten Kondensatoranschluss aufweist, und
- zumindest eine erste Stromschiene, welche den ersten Gleichspannungsanschluss mit dem ersten Kondensatoranschluss verbindet, und zumindest eine zweite Stromschiene, welche den zweiten Gleichspannungsanschluss mit dem zweiten Kondensatoranschluss verbindet, wobei die erste und die zweite Stromschiene räumlich parallel geführt und elektrisch voneinander isoliert sind. Gekennzeichnet ist die Schaltungsanordnung dadurch, dass sie ferner zumindest einen mit dem Kondensator in Serie geschalteten Widerstand aufweist, wobei der zumindest eine Widerstand in der ersten und/oder der zweiten Stromschiene angeordnet ist.

## Beschreibung

Die Erfindung betrifft eine Schaltungsanordnung für einen Stromrichter, einen Stromrichter mit einer solchen Schaltungsanordnung sowie ein Schienenfahrzeug mit einem solchen Stromrichter.

Insbesondere in Schienenfahrzeugen dienen Stromrichter einer Wandlung von über eine Oberleitung oder eine dritte Schiene eines Versorgungsnetzes zugeführter elektrischer Energie in für Verbraucher des Schienenfahrzeugs, einschließlich elektrische Traktionsmotoren und elektrisch betriebene Hilfsbetriebe, angepasste Wechsel- und Gleichspannungen. Bei einer Versorgung des Schienenfahrzeugs über eine Oberleitung mit in Europa typischen Wechselspannungen von 15kV 16,7Hz oder 25kV 50Hz erfolgt üblicherweise zunächst eine Spannungswandlung auf ein niedrigeres Spannungsniveau mittels eines Transformators. Dabei ist eine Primärseite des Transformators über einen Stromabnehmer mit dem Versorgungsnetz, beispielsweise einer Oberleitung, und eine Sekundärseite des Transformators mit einem netzseitigen Stromrichter verbunden. Dieser netzseitige Stromrichter ist beispielsweise als ein so genannter Vierquadrantensteller (4QS) ausgestaltet, welcher die transformierte netzseitige Wechselspannung in eine ausgangsseitige Gleichspannung wandelt. Der netzseitige Stromrichter speist ausgangsseitig einen Zwischenkreis, in welchem unabhängig von insbesondere netzseitigen Schwankungen des Spannungsniveaus eine konstante Gleichspannung angestrebt wird. Der Gleichspannungszwischenkreis ist weiterhin mit einem lastseitigen Stromrichter verbunden. Dieser lastseitige Stromrichter ist beispielsweise als ein Pulswechselrichter (PWR) ausgestaltet, welcher die zwischenkreisseitige Gleichspannung in eine Drehstrom-Wechselspannung mit variabler Frequenz und variablen Spannungsniveau wandelt, mittels welcher ein oder mehrere Traktionsmotoren des Schienenfahrzeugs gespeist werden. Alternativ bzw. ergänzend kann ein mit dem Gleichspannungszwischenkreis verbundener lastseitiger Stromrichter ebenso eine Wechselspannung mit konstanter Frequenz und konstantem Spannungsniveau zur Versorgung von beispielsweise Hilfsbetrieben des Schienenfahrzeugs bereitstellen.

Bei einer Versorgung des Schienenfahrzeugs über eine Oberleitung oder eine dritte Schiene mit ebenfalls in Europa typischen Gleichspannungen von 750V, 1.5kV oder 3kV kann ein lastseitiger Stromrichter auch direkt über einen Filterkreis bestehend aus einem Kondensator und einer Drossel oder, insbesondere bei einem so genannten Mehrsystem-Schienenfahrzeug, der Gleichspannungszwischenkreis abhängig von dessen gewähltem Spannungsniveau direkt oder über einen Gleichspannungswandler bzw. -steller gespeist werden. Ebenso kann der Gleichspannungszwischenkreis von einer in dem Schienenfahrzeug angeordneten elektrischen Energiequelle, beispielsweise einer Traktionsbatterie und/oder einer Brennstoffzelle, gespeist werden, welche wiederum direkt oder über einen Gleichspannungswandler bzw. -steller mit dem Gleichspannungszwischenkreis verbunden sind.

Für die Spannungswandlung werden in Stromrichtern üblicherweise steuerbare Leistungshalbleiterschalter wie IGBT (Insulated-Gate Bipolar Transistor) oder MOSFET (Metal-Oxide-Semiconductor Field-Effect Transistor) auf Silizium bzw. zunehmend auf Silizium-Carbid (SiC) oder Gallium-Nitrid (GaN) -Basis eingesetzt. Diese sind beispielsweise in Form einer jeweiligen Halbbrücke bestehend aus zwei in Serie geschalteten Leistungshalbleiterschaltern mit, sofern erforderlich, einer jeweils antiparallel geschalteten Freilaufdiode für eine Rückwärtsleitfähigkeit in einem Modul, nachfolgend als Halbbrückenmodul bezeichnet, angeordnet. Ein solches Halbbrückenmodul weist ein geschlossenes Modulgehäuse auf, welches die Leistungshalbleiterschalter insbesondere vor Umwelteinflüssen schützt sowie einen Berührungsschutz bietet. Alternativ zu einem solchen Halbbrückenmodul kann eine Halbbrücke ebenfalls durch zwei Einzelschaltermodule mit jeweils einem Leistungshalbleiterschalter sowie gegebenenfalls einer antiparallel geschalteten Freilaufdiode in einem jeweiligen Modulgehäuse durch geeignetes Verschalten von Anschlüssen der beiden Einzelschaltermodule verwirklicht werden.

Insbesondere in Traktionsanwendungen von Stromrichtern, beispielsweise einem Pulswechselrichter zur Speisung eines oder mehrerer Drehstrom-Traktionsmotoren eines Schienenfahrzeugs, werden so genannte IHM- Module (IGBT High-Power Module) mit Leistungshalbleiterschaltern mit einer Sperrspannung von 1.7kV oder 3.3kV sowie IHV-Module (IGBT High-Voltage Module) mit Leistungshalbleiterschaltern mit einer Sperrspannung von 6.5kv eingesetzt. Ein Modul bzw. Modulgehäuse weist eine Mehrzahl elektrischer Anschlüsse auf, welche mit Stromschienen oder Leitungen verbunden werden, beispielsweise mittels einer Schraubverbindung bzw. einer Zylinderkopfschraube, sowie einen oder mehrere Steueranschlüsse, welche mit Steuerleitungen zur Steuerung der Leistungshalbleiterschalter verbunden werden. Ferner weist ein Modulgehäuse eine von dem bzw. den Leistungshalbleiterschaltern elektrisch isolierte jedoch thermisch leitend verbundene Bodenplatte beispielsweise aus einem AlSiC -Material auf. Diese Bodenplatte wird mit einem Kühlkörper thermisch verbunden, um während des Betriebs des Stromrichters entstehende Verlustwärme aus dem Modulgehäuse abzuführen. Üblicherweise ist ein solcher Kühlkörper aus einem Aluminium-Material hergestellt, an dessen ebener Oberseite mehrere Module sowie gegebenenfalls weitere zu kühlende Komponenten des Stromrichters angeordnet sind. An seiner Unterseite kann der Kühlkörper hingegen eine Vielzahl Kühlrippen aufweisen, welche zur Wärmeabfuhr von Kühlluft umströmbar sind. Alternativ zu einer Luftkühlung kann der Kühlkörper jedoch auch flüssigkeitsgekühlt ausgeführt sein, wobei dieser dann von einer Kühlflüssigkeit durchströmte Kühlkanäle aufweist.

Ein Halbbrückenmodul bzw. entsprechend verschaltete Einzelschaltermodule weisen einerseits Gleichspannungsanschlüsse auf, welche über Gleichstromschienen mit einem Gleichspannungszwischenkreis verbunden sind, sodass im Betrieb des Stromrichters an diesen ein positives sowie ein negatives Spannungspotenzial bzw. ein Massepotenzial anliegt. Weiterhin weist ein Halbbrückenmodul einen Wechselspannungsanschluss auf, welcher mit dem gemeinsamen Knoten der beiden Leistungshalbleiterschalter verbunden ist, und welcher über eine Wechselstromschiene bzw. eine Wechselstromleitung mit einer Last, beispielsweise mit einer Phase der Statorwicklung eines Traktionsmotors, verbunden ist. Für die Speisung einer dreiphasigen Statorwicklung sind in dem beispielhaften Pulswechselrichter beispielsweise drei Halbbrückenmodule parallel an dem Gleichspannungszwischenkreis geschaltet, wobei jede der drei Phasen der Statorwicklung mit einem jeweiligen Wechselspannungsanschluss eines Halbbrückenmoduls verbunden ist. Zur Erhöhung der Leistung des Stromrichters können je Phase der Statorwicklung auch mehrere Halbbrückenmodule parallelgeschaltet werden. Hierzu ist beispielsweise aus der europäischen Patentschrift EP 3 404 818 B1 bekannt, gleiche Gleichspannungsanschlüsse mehrerer räumlich beabstandeter Halbbrückenmodule durch eine jeweilige Gleichspannungsverschienung zu verbinden. Die Schienen für das positive und das negative Spannungspotenzial des Gleichspannungszwischenkreises sind dabei übereinander angeordnet sind, wodurch diese niederinduktiv wirken bzw. eine nur geringe parasitäre Induktivität aufweisen. In gleicher Weise sind auch die Wechselspannungsanschlüsse der mehreren Halbbrückenmodule einer Phase durch eine Wechselspannungsverschienung miteinander verbunden.

Stromrichter mit einem Gleichspannungszwischenkreis weisen üblicherweise einen oder mehrere in dem Zwischenkreis angeordnete Kondensatoren als Energiespeicher auf, die insbesondere einer Glättung von Spannungswelligkeiten im Zwischenkreis dienen. Dabei können mehrere verteilt angeordnete Kondensatoren vorgesehen sein, wie sie beispielsweise in der vorstehend genannten europäischen Patentschrift EP 3 404 818 B1 offenbart sind. Jedem Halbbrückenmodul ist ein Kondensator zugeordnet, wobei die Kondensatoren entsprechend den mehreren Halbbrückenmodulen über die Gleichspannungsverschienungen parallelgeschaltet sind.

Bei Betrachtung einer Halbbrücke bzw. eines Halbbrückenmoduls sowie einem mit diesem gleichspannungsseitig verbundenen Kondensator besteht ein Kommutierungskreis, also der Stromkreis, in dem sich bei einem Schaltvorgang eines Leistungshalbleiterschalters der Strom ändert, aus den beiden Leistungshalbleiterschaltern der Halbbrücke, dem Kondensator sowie der Gleichspannungsverschienung. Für das Schaltverhalten der Leistungshalbleiterschalter ist dabei die parasitäre Induktivität im Kommutierungskreis von Bedeutung. Die Gleichspannungsverschienung weist eine Streuinduktivität auf, welche durch eine großflächige Ausgestaltung und eine gering beabstandete parallele Führung verringert werden kann. Eine geringe Streuinduktivität bewirkt vorteilhaft eine Verringerung von Spannungsüberhöhungen beim Schalten der Leistungshalbleiterschalter, führt jedoch zu einem höheren Anteil des nach Abschluss einer Kommutierung in den Kondensator fließenden Kommutierungsstroms. Weist der Stromrichter mehrere Halbbrücken bzw. Halbbrückenmodule auf, die gleichspannungsseitig mit einem jeweiligen Kondensator und einem gemeinsamen Gleichspannungszwischenkreis verbunden sind sowie wechselspannungsseitig beispielsweise jeweils eine Phase eines Traktionsmotors speisen, bewirkt insbesondere die phasenversetzte Taktung der Leistungshalbleiterschalter einen Ausgleichsvorgang, bei welchem Ausgleichsströme zwischen den mehreren Kondensatoren fließen, die nachteilig resonante Spannungsüberhöhungen an den Kondensatoren hervorrufen.

Aufgabe der Erfindung ist es daher, eine Schaltungsanordnung anzugeben, mittels welcher solche resonanten Überspannungen an verteilt angeordneten Kondensatoren verringert werden.

Diese Aufgabe wird durch die Merkmale der unabhängigen Patentansprüche gelöst. Weiterbildungen der Erfindung sind in jeweiligen abhängigen Patentansprüchen angegeben.

Ein erster Aspekt der Erfindung betrifft eine Schaltungsanordnung für einen Stromrichter, wobei die Schaltungsanordnung aufweist:
- zumindest eine Halbbrücke mit jeweils zwei in Serie geschalteten Leistungshalbleiterschaltern, wobei die Halbbrücke zumindest ein Modul mit jeweils zumindest einem Leistungshalbleiterschalter aufweist, und wobei die Halbbrücke einen ersten Gleichspannungsanschluss, einen zweiten Gleichspannungsanschluss und einen Wechselspannungsanschluss aufweist,
- einen Kondensator, welcher parallel zu der Halbbrücke geschaltet ist und einen ersten Kondensatoranschluss und einen zweiten Kondensatoranschluss aufweist, und
- zumindest eine erste Stromschiene, welche den ersten Gleichspannungsanschluss mit dem ersten Kondensatoranschluss verbindet, und zumindest eine zweite Stromschiene, welche den zweiten Gleichspannungsanschluss mit dem zweiten Kondensatoranschluss verbindet, wobei die erste und die zweite Stromschiene räumlich parallel geführt und elektrisch voneinander isoliert sind. Gekennzeichnet ist die Schaltungsanordnung dadurch, dass sie ferner zumindest einen mit dem Kondensator in Serie geschalteten Widerstand aufweist, wobei der zumindest eine Widerstand in der ersten und/oder der zweiten Stromschiene angeordnet ist.

Erfindungsgemäß integriert die Schaltungsanordnung somit einen oder mehrere Widerstände in dem Kommutierungskreis einer Halbbrücke, mittels welchem einleitend beschriebene Resonanzströme zwischen verteilt angeordneten Kondensatoren im Betrieb eines Stromrichters verringert und dadurch entstehende Spannungsspitzen bedämpft werden. Insbesondere bei mehreren gleichspannungsseitig parallelgeschalteten Schaltungsanordnungen bewirken die jeweils in Serie mit einem Kondensator geschalteten Widerstände, dass Ausgleichsströme immer über mehrere Widerstände fließen, wodurch Spannungsüberhöhungen an den Kondensatoren verringert werden.

Eine erfindungsgemäße Integration zumindest eines Widerstands in die Gleichspannungsverschienung ermöglicht vorteilhaft, die durch die Gleichspannungsverschienung erzielbare niederinduktive Verbindung des Kondensators mit der Halbbrücke beizubehalten. Die Anordnung des Widerstands in einer Stromschiene bedeutet dabei, dass dieser als ein Teil der Stromschiene, welche einen Gleichspannungsanschluss der Halbbrücke mit einem Kondensatoranschluss verbindet, bzw. als ein Abschnitt der Stromschiene, welcher insbesondere einen Längenabschnitt der Stromschiene ersetzt oder zwischen zwei Längenabschnitten der Stromschiene angeordnet ist, verwirklicht ist.

Die in Serie geschalteten Leistungshalbleiterschalter der Halbbrücke sind beispielsweise in einem gemeinsamen Modulgehäuse angeordnet, welches entsprechend zwei Gleichspannungsanschlüsse, einen Wechselspannungsanschluss sowie eine Anzahl Steueranschlüsse aufweist. Ein solches Modul wird üblicherweise als Halbbrückenmodul bezeichnet. Alternativ können die beiden Leistungshalbleiterschalter ebenso in einem jeweiligen Modulgehäuse angeordnet sein, deren Anschlüsse entsprechend einer Halbbrücke verschaltet sind, sodass diese zusammen wiederum Gleich- und Wechselspannungsanschlüsse einer Halbbrücke bereitstellen.

Ein Modulgehäuse kann für jeden elektrischen Anschluss mehrere mechanische Anschlüsse aufweisen, beispielsweise um unterschiedliche Stromschienen an dem Modulgehäuse zu befestigen bzw. mit den Anschlüssen mechanisch zu verbinden, wobei die Stromschienen einerseits das Modul bzw. die Module mit dem Kondensator und andererseits mit einem Zwischenkreis des Stromrichters oder mit einem anderen Modul verbinden. Die mechanische Befestigung der Stromschienen an den Anschlüssen eines Modulgehäuses erfolgt dabei beispielsweise mittels Zylinderkopfschrauben.

Für eine niederinduktive Verbindung des Kondensators mit der Halbbrücke sind die erste und die zweite Stromschiene vorzugsweise über zumindest eine wesentliche Länge parallel geführt. Vorzugsweise sind sie dabei direkt übereinander angeordnet und lediglich durch ein geeignetes Isoliermaterial, beispielsweise einen Isolierfilm, mechanisch und elektrisch voneinander getrennt. Abhängig von der Geometrie der Gleichspannungsanschlüsse des bzw. der Module sowie der Kondensatoranschlüsse kann eine Stromschiene beispielsweise eine gegenüber der anderen Stromschiene größere bzw. kleinere Länge aufweisen oder beispielsweise eine Aussparung im Bereich eines der anderen Stromschiene zugeordneten Anschlusses aufweisen.

Der Wechselspannungsanschluss der Halbbrücke kann ebenfalls mit einer weiteren Stromschiene verbunden werden, welche beispielsweise als eine Wechselspannungsverschienung einem Anschluss eines Motorstromkabels für eine Phase eines Traktionsmotors als zu speisende Last des Stromrichters dient.

Wie in der einleitend genannten europäischen Patentschrift EP 3 404 818 B1 beschrieben, können zur Erhöhung der Leistung des Stromrichters mehrere Halbbrücken mittels einer gemeinsamen Gleichspannungsverschienung und Wechselspannungsverschienung hart parallelgeschaltet sein. Diese parallelgeschalteten Halbbrücken können entsprechend über gemeinsame erste und zweite Stromschienen mit einem gemeinsamen Kondensator verbunden sein.

Als Leistungshalbleiterschalter können entsprechend der einleitenden Beschreibung insbesondere IGBT oder MOSFET auf Silizium, Silizium-Carbid oder Gallium-Nitrid -Basis eingesetzt werden.

Die Kapazität des Kondensators der erfindungsgemäßen Schaltungsanordnung ist derart bemessen, dass sie einen wesentlichen Anteil an einer Gesamtkapazität eines Gleichspannungszwischenkreises darstellt. Bei einem Stromrichter mit mehreren jeweils mit einem Gleichspannungszwischenkreis verbundenen Schaltungsanordnungen stellen die verteilt angeordneten Kondensatoren entsprechend gemeinsam die für den Betrieb des Stromrichters erforderliche Gesamtkapazität des Gleichspannungszwischenkreises dar. Nur in speziellen Ausnahmefällen, beispielsweise bei einem Versorgungsnetz mit stark schwankendem Spannungsniveau, kann in dem Gleichspannungszwischenkreis ein zusätzlicher Zwischenkreiskondensator vorgesehen werden, um die Gesamtkapazität weiter zu erhöhen. Da ein solcher zusätzlicher Zwischenkreiskondensator außerhalb der jeweiligen Kommutierungszelle der Schaltungsanordnungen angeordnet ist, kann dieser höherinduktiv, also über eine Zwischenkreisinduktivität, welche deutlich größer als die Induktivität der Kommutierungszelle ist, angeschlossen werden.

Die Dimensionierung des Kondensators der Schaltungsanordnung unterscheidet sich von einem bekannten Snubber bzw. Snubberglied bestehend aus einer Serienschaltung eines Kondensators und Widerstands, wie sie in der Vergangenheit in Hochleistungsstromrichtern eingesetzt wurden. Bei einem solchen bekannten Snubberglied wurde die Kapazität des Kondensators auf die von dem Halbleiterschalter zu schaltende Induktivität abgestimmt und war daher üblicherweise wesentlich kleiner als die Kapazität eines Zwischenkreiskondensators, weshalb der Kondensator insbesondere in einem Leistungshalbleitermodul integriert wurde.

Gemäß einer Weiterbildung der Schaltungsanordnung ist der zumindest eine Widerstand gegenüber der Stromschiene, in welcher er angeordnet ist, aus einem unterschiedlichen Material gefertigt, und/oder weist der Widerstand eine in zumindest einem Teilbereich unterschiedliche Breite und/oder Dicke auf, und/oder weist der Widerstand eine unterschiedliche Form auf

In Stromrichtern eingesetzte Stromschienen sind üblicherweise aufgrund des niedrigen elektrischen Widerstands aus einem Kupfermaterial gefertigt und weisen eine über die wesentliche Länge einheitliche Breite und Dicke auf. Die Stromschienen weisen dabei eine über die Länge einheitliche Breite und Dicke auf. Eine Niederinduktivität bzw. eine geringe Streuinduktivität der Verschienung wird, wie einleitend beschrieben, durch eine möglichst großflächige Ausdehnung und einen geringen Abstand zwischen parallel geführten Stromschienen erzielt. Ein höherer elektrischer Widerstand in einer Stromschiene kann somit insbesondere durch Einsatz eines anderen Materials als das der Stromschiene erzielt werden, beispielsweise durch Ersetzen eines Abschnitts der Stromschiene durch einen entsprechenden Abschnitt aus dem anderen Material bei ansonsten weitgehend identischen Abmaßen, sodass die beiden Stromschienen für eine gewünschte Niederinduktivität der Verschienung weiterhin parallel geführt sind. Als ein solches anderes Material ist insbesondere Edelstahl geeignet, welches gegenüber Kupfer eine geringere elektrische Leitfähigkeit und damit einen höheren elektrischen Widerstand aufweist. Der in einer Stromschiene angeordnete Widerstand kann somit beispielsweise als ein Edelstahlblech ausgestaltet sein, dessen flächigen Abmaße weitgehend denen des ersetzten Abschnitts der Stromschiene entspricht.

Alternativ oder ergänzend zu einem unterschiedlichen Material kann ein höherer elektrischer Widerstand ebenfalls durch unterschiedliche Abmaße erzielt werden, beispielsweise durch Verringerung einer Breite und/oder einer Dicke der Stromschiene in einem Abschnitt der Stromschiene, wodurch deren elektrische Leitfähigkeit verringert und der Widerstand entsprechend erhöht wird. Beispielsweise kann ein Edelstahlblech mit einer geringeren Dicke bei ansonsten gleicher Breite wie die Stromschiene als Widerstand in einem Abschnitt der aus einem Kupfermaterial bestehenden Stromschiene angeordnet sein. Hinsichtlich einer geringen Streuinduktivität ist dabei eine geringe Dicke bei großer Breite vorteilhaft, wobei hierdurch zudem eine effiziente Entwärmung des Widerstands aufgrund der in diesem auftretenden Verlustleistung begünstigt wird.

Auch eine unterschiedliche Form des Widerstands gegenüber der Stromschiene ist alternativ oder ergänzend zu den vorstehend genannten Ausgestaltungen des Widerstands möglich. Dabei kann der Widerstand beispielsweise eine größere Länge als die entsprechende Stromschiene bzw. als der entsprechende Stromschienenabschnitt aufweisen. So weist das bereits genannte Edelstahlblech eine gegenüber der Stromschiene bzw. dem Abschnitt geringere Dicke sowie mittels einer einfachen oder mehrfachen Falzung eine beispielsweise deutlich größere Länge auf. Im Bereich der aufgrund der Falzung aufeinanderliegenden Teilabschnitte kann dabei beispielsweise eine jeweilige Folie zur gegenseitigen elektrischen Isolierung eingelegt werden. Alternativ kann das Edelstahlblech jedoch ebenso mit einer elektrisch isolierenden Lackschicht versehen werden. Eine unterschiedliche Form kann ferner beispielsweise ebenso durch Anordnung eines Scheibenwiderstands in der Stromschiene gegeben sein, welcher typischerweise eine zylindrische Form mit jeweiligen elektrischen Anschlüsse an den Stirnseiten bzw. der Ober- und Unterseite aufweist.

Gemäß einer weiteren Weiterbildung der Schaltungsanordnung ist die Stromschiene, in welcher der Widerstand angeordnet ist, in einen ersten und einen zweiten Längenabschnitt unterteilt, wobei der erste Stromschienenabschnitt in einem ersten Endbereich mit dem Gleichspannungsanschluss der Halbbrücke verbunden ist und der zweite Stromschienenabschnitt in einem ersten Endbereich mit dem Kondensatoranschluss verbunden ist, und wobei der erste und der zweite Stromschienenabschnitt in einem jeweiligen zweiten Endbereich einen Anschlussbereich aufweisen, an welchen sie mit einem jeweiligen Anschlussbereich des Widerstands verbunden sind.

Der jeweilige erste Endbereich der beiden Längenabschnitte der Stromschiene ist vorzugsweise entsprechend einer bekannten ungeteilten Stromschiene ausgestaltet, sodass die Stromschienenabschnitte in diesen Bereichen mit dem Gleichspannungsanschluss der Halbbrücke bzw. mit dem Kondensatoranschluss mechanisch verbunden werden können. Der jeweilige zweite Endbereich der beiden Längenabschnitte ist hingegen derart ausgestaltet, dass in diesem Bereich eine mechanische Verbindung mit Anschlüssen des Widerstands möglich ist. Beispielsweise weist ein Edelstahlblech als Widerstand mit den Anschlussbereichen der Stromschienenabschnitte kompatible Anschlussbereiche auf, welche mittels eines Fügeverfahrens, beispielsweise durch Löten oder Schweißen, mit den Anschlussbereichen der Stromschienenabschnitte mechanisch verbunden werden und dadurch eine elektrische Verbindung herstellen. Um bei einem solchen Fügeverfahren Kontaktkorrosion zwischen den unterschiedlichen Materiale der Stromschiene und des Widerstands zu vermeiden, können die Anschlussbereiche der Stromschienenabschnitte beispielsweise zuvor mit einem edleren Metall versehen werden.

Gemäß einer weiteren Ausgestaltung der Schaltungsanordnung ist der zumindest eine Widerstand thermisch mit einem Kühlkörper gekoppelt, wobei der Kühlkörper insbesondere einer Kühlung des zumindest einen Moduls dient.

Mittels einer thermischen Kopplung des zumindest einen Widerstands der Schaltanordnung mit einem Kühlkörper kann vorteilhaft einer möglichen Zerstörung des Widerstands insbesondere bei Fließen eines pulsartigen Kurzschlussstroms über den Widerstand vorgebeugt werden. Ein solcher Kurzschlussstrom bzw. eine Stoßentladung des Kondensators tritt beispielsweise bei einem Kurzschluss in dem Stromrichter oder einer Beschädigung des Kondensators auf. In einem Stromrichter für ein Schienenfahrzeug mit einem Betriebsspannungsniveau des Gleichspannungszwischenkreises von über 1kV kann beispielsweise ein Kurzschlussstrom mit mehreren 10kA über den Widerstand fließen. Insbesondere ist dabei auch eine entsprechend dimensionierte elektrische Isolierung zwischen dem Widerstand und dem üblicherweise aus einem Metall, insbesondere einem Aluminium-Material, gefertigten Kühlkörper vorzusehen, welche ein Überschlagen eines solchen Kurzschlussstroms in den Kühlkörper verhindert und dessen Ableitung über den Widerstand und Stromschienen auf beispielsweise ein Massepotenzial des Schienenfahrzeugs sicherstellt. Jedoch ist auch während des normalen Betriebs des Stromrichters bereits eine Wärmeabfuhr aus dem Widerstand vorteilhaft.

Als Kühlkörper für eine Wärmeabfuhr aus dem zumindest einen Widerstand kann beispielsweise ein Kühlkörper des Stromrichters verwendet werden, auf welchem Module der Halbbrücken mechanisch befestigt und für eine Wärmeabfuhr aus den Modulgehäusen thermisch gekoppelt sind. Sofern mehrere Modulgehäuse, wie in der einleitend genannten europäischen Patentschrift EP 3 404 818 B1 beschrieben, auf einer Oberfläche eines gemeinsamen Kühlkörpers nebeneinander angeordnet sind und einen jeweiligen räumlichen Abstand zu dem jeweils zugeordneten Kondensator aufweisen, welcher mittels Stromschienen überbrückt wird, kann der Kühlkörper beispielsweise bis in den Bereich der Stromschienen erweitert werden, sodass die in den Stromschienen angeordneten Widerstände räumlich oberhalb des Kühlkörpers angeordnet und dadurch mit diesem in einfacher Weise thermisch koppelbar sind. Auch kann ein derart erweiterter Kühlkörper einer Befestigung der Kondensatoren dienen, beispielsweise indem geeignete Halterungen für die Kondensatoren an dem Kühlkörper mechanisch befestigt werden.

Ein sowohl für die thermische Kopplung als auch elektrische Isolierung geeignetes Material ist beispielsweise Duroplast, welches eine hohe thermomechanische Festigkeit bei gleichzeitig geringem Gewicht aufweist. Mithin ist dieses Material in hohem Maße flexibel und individuell gestaltbar, sodass dieses der Form des Widerstands bzw. der Stromschiene mit darin angeordnetem Widerstand im Bereich des Abstands angepasst werden kann, um diese insbesondere vollständig gegenüber dem Kühlkörper elektrisch zu isolieren. Dabei kann der Widerstand beispielsweise auch nicht unmittelbar im Bereich der Oberfläche des Kühlkörpers angeordnet sein, sondern einen Abstand zu diesem aufweisen, welcher mittels eines geeignet geformten Wärmeleitkörpers aus dem Duroplast-Material überbrückt wird. Ein solcher Wärmeleitkörper kann bei mehreren an der Oberfläche des Kühlkörpers nebeneinander angeordneten Modulen zudem beispielsweise eine mehrere Widerstände umfassende Länge aufweisen. Ferner kann der Wärmeleitkörper mechanisch an dem Kühlkörper befestigt werden, beispielsweise über geeignete Schraubverbindungen im Bereich zwischen jeweils zwei Widerständen, um die elektrische Isolierung sicherzustellen.

Gemäß einer auf der vorstehenden Ausgestaltung basierenden weiteren Ausgestaltung der Schaltungsanordnung erfolgt die thermische Kopplung des zumindest einen Widerstands mit dem Kühlkörper mittels einer mechanischen Krafteinwirkung im Bereich des Widerstands auf einer dem Kühlkörper abgewandten Seite des Widerstands.

Insbesondere bei einem flächigen Widerstand wie beispielsweise einem Edelstahlblech sollte die Oberfläche des Widerstands für eine optimale Wärmeabfuhr möglichst vollständig mit dem Kühlkörper thermisch gekoppelt sein. Da sowohl ein solches Edelstahlblech als auch die dem Widerstand zugewandte Seite eines Kühlkörpers sowie, sofern vorhanden, die Ober- und Unterseiten eines Wärmeleitkörpers aufgrund von herstellungsbedingten Toleranzen nicht perfekt plan bzw. eben sind, können die sich direkt oder indirekt berührenden Seiten des Widerstands und des Kühlkörpers bzw. der jeweiligen Seite des Wärmeleitkörpers mittels eines Zusammenpressens der Bauteile vergrößert und damit die thermische Kopplung des Widerstands mit dem Kühlkörper vorteilhaft erhöht werden.

Insbesondere bei in Fahrzeugen und speziell in Schienenfahrzeugen eingesetzten Stromrichtern ist es dabei von Bedeutung, dass die Krafteinwirkung unabhängig von Bewegungen des Stromrichters oder von auf diesen wirkenden Vibrationen und Stößen konstant gehalten wird, um eine gute thermische Verbindung während des gesamten Betriebszeitraums des Stromrichters, welcher bis zu 30 Jahre betragen kann, zuverlässig zu gewährleisten.

Das Zusammenpressen der Bauteile erfolgt mittels einer mechanischen Krafteinwirkung, welche vorzugsweise senkrecht und gleichmäßig über die Fläche des Widerstands verteilt auf die dem Kühlkörper abgewandte Seite des Widerstands wirkt. Einer Krafteinwirkung dient dabei beispielsweise eine Druckeinrichtung umfassend zumindest einen ersten Druckkörper sowie zumindest ein zwischen dem ersten Druckkörper und dem Widerstand angeordnetes Ausgleichsmittel.

Der erste Druckkörper kann beispielsweise aus einem elektrisch isolierenden Material, beispielsweise entsprechend dem Wärmeleitkörper aus einem Duroplast, oder als ein geeignet ausgestalteter Druckguss oder Strangprofil aus einem Aluminiummaterial hergestellt sein. Der erste Druckkörper ist beispielsweise ortsstabil mit dem Kühlkörper lösbar verbunden. Bei mehreren an der Oberfläche des Kühlkörpers nebeneinander angeordneten Modulen erstreckt sich der erste Druckkörper entsprechend dem vorstehend beschriebenen Wärmeleitkörper vorzugsweise über eine mehrere Widerstände bzw. Stromschienen umfassende Länge, wodurch vorteilhaft eine einheitliche Krafteinwirkung auf die mehreren Widerstände erzielt werden kann. Eine mechanisch lösbare Verbindung mit dem Kühlkörper kann entsprechend dem Wärmeleitkörper in einem Bereich zwischen jeweils zwei benachbart angeordneten Widerständen bzw. Stromschienen erfolgen, wobei jedoch eine Verbindung außerhalb des Bereichs der mehreren Widerstände in gleicher Weise möglich ist.

Das zumindest eine Ausgleichsmittel kann insbesondere mehrere Federn, beispielsweise Spiral-, Teller-, Blatt-, Block- oder Wellenfedern, umfassen, welche an dem ersten Druckkörper befestigt bzw. in diesem ortsfest gelagert sind. Das bzw. die Ausgleichsmittel dienen dazu, eine von dem Druckkörper ausgehende Krafteinwirkung gleichmäßig über die Fläche des Widerstands bzw. der Stromschiene zu verteilen. Die Federn können beispielsweise aus einem Metall hergestellt und insbesondere für eine elektrische Isolierung mit einer Kunststoffbeschichtung versehen sein. Alternativ können die Federn jedoch auch aus einem elektrisch nichtleitendem Material, beispielsweise einem Elastomer in Form eines zylindrischen Körpers gefertigt sein.

Ergänzend kann die Druckeinrichtung ferner einen zweiten Druckkörper umfassen, welcher zwischen dem zumindest einen Ausgleichsmittel und dem Widerstand bzw. der Stromschiene angeordnet ist. Der zweite Druckkörper erstreckt sich dabei vorzugsweise ausschließlich über die dem Ausgleichsmittel zugewandte Seite des Widerstands und dient ergänzend einer gleichmäßigen Krafteinwirkung auf die Fläche des Widerstands sowie gegebenenfalls einer elektrischen Isolierung des Widerstands bzw. der Stromschiene, mit dem bzw. der er in mechanischem Kontakt ist, von dem beispielsweise aus einem elektrisch leitfähigen Material gefertigten ersten Druckkörper. Ferner kann der zweite Druckkörper entsprechend dem ersten Druckkörper dazu ausgestaltet sein, das zumindest eine Ausgleichsmittel ortsfest zu lagern.

Ein zweiter Aspekt der Erfindung betrifft einen Stromrichter, welcher zumindest einen Gleichspannungszwischenkreis sowie zumindest eine Schaltungsanordnung gemäß dem ersten Aspekt der Erfindung.

Gemäß einer ersten Ausgestaltung des Stromrichters liegt im Betrieb des Stromrichters an dem ersten Gleichspannungsanschluss der Halbbrücke und der ersten Stromschiene ein erstes Spannungspotenzial des Gleichspannungszwischenkreises an, wobei an dem zweiten Gleichspannungsanschluss der Halbbrücke und der zweiten Stromschiene ein zweites Spannungspotenzial des Gleichspannungszwischenkreises anliegt, und wobei der erste Gleichspannungsanschluss und der zweite Gleichspannungsanschluss der Halbbrücke über eine jeweilige weitere Stromschiene mit dem Gleichspannungszwischenkreis verbunden sind.

Das Modulgehäuse eines Halbbrückenmoduls kann dabei weitere mechanische Anschlüsse der ersten und zweiten Gleichspannungsanschlüsse aufweisen, an welchen die weiteren Stromschienen für die elektrische Verbindung mit dem Gleichspannungszwischenkreis beispielsweise wiederum mittels Zylinderkopfschrauben mechanisch befestigt werden.

Die weiteren Stromschienen können dabei für eine Niederinduktivität bzw. eine geringe Streuinduktivität entsprechend einer einleitend beschriebenen Verschienung parallel geführt sowie großflächig und gering voneinander beabstandet ausgeführt sein. Vorzugsweise dient eine solche weitere Verschienung dazu, mehrere Schaltungsanordnungen, beispielsweise für die Speisung einer dreiphasigen Statorwicklung eines Traktionsmotors, parallel an dem Gleichspannungszwischenkreis zu schalten.

Für eine Führung der weiteren Stromschienen können diese beispielsweise an der Druckeinrichtung, insbesondere an dem mehrere Widerstände bzw. Stromschienen umfassenden ersten Druckkörper, mechanisch befestigt werden, wozu der erste Druckkörper entsprechend geeignet ausgestaltet ist.

Gemäß einer weiteren Ausgestaltung des Stromrichters weist dieser ferner zumindest drei Schaltungsanordnungen auf, wobei die ersten und zweiten Wechselspannungsanschlüsse der Halbbrücken jeweils parallelgeschaltet sind, und wobei die Module der Halbbrücken insbesondere auf einem gemeinsamen Kühlkörper angeordnet sind.

Das Vorsehen eines Kondensators und Widerstands als Bestandteile einer jeweiligen Schaltungsanordnungen bewirkt vorteilhaft, dass entstehende resonante Ströme zwischen den Schaltungsanordnungen immer über mehrere Widerstände fließen und entsprechend gedämpft werden.

Eine Koppelinduktivität zwischen der Kommutierungszelle und dem Gleichspannungszwischenkreis kann deutlich größer als die parasitären Induktivitäten in dem Gleichspannungszwischenkreis sein. Beispielsweise kann die Koppelinduktivität derart bemessen sein, dass zumindest siebzig Prozent eines Kommutierungsstrom während einer Kommutierung in die Kapazität der Kommutierungszelle fließt. Ferner kann die Kapazität der Kommutierungszelle sowie der Widerstand derart bemessen sein, dass resonante Ströme zwischen den Kondensatoren der Schaltungsanordnungen eine Überspannung an den Kondensatoren von kleiner oder gleich fünf Prozent hervorrufen. Ferner kann die Kapazität des Kondensators einer jeweiligen Schaltungsanordnung sowie der Widerstand derart bemessen sein, dass eine wirksame ohmsche Überspannung aufgrund eines Kommutierungsstroms kleiner fünf Prozent ist. Schließlich kann der Widerstandswert des zumindest einen Widerstands der Schaltungsanordnung derart bemessen sein, dass für den Fall eines Kurzschlusses in dem Gleichspannungszwischenkreis mehr als zehn Prozent der in dem Gleichspannungszwischenkreis gespeicherten elektrischen Energie in dem zumindest einen Widerstand in Wärme wandelbar ist.

Ein dritter Aspekt der Erfindung betrifft schließlich ein Fahrzeug, insbesondere ein Schienenfahrzeug, welches zumindest einen Stromrichter gemäß einer Ausgestaltung des zweiten Aspekts der Erfindung aufweist.

Ein solcher Stromrichter kann beispielsweise als ein Pulswechselrichter für die Speisung einer Last, beispielsweise ein oder mehrere Traktionsmotoren des Fahrzeugs, mit einer Drehstrom-Wechselspannung mit variabler Frequenz und variablen Spannungsniveau, oder beispielsweise ein oder mehrere Hilfsbetriebe des Fahrzeugs, mit einer Drehstrom-Wechselspannung mit konstanter Frequenz und konstantem Spannungsniveau, ausgestaltet sein.

Ausführungsbeispiele der Erfindung werden nachfolgend anhand von Figuren beschrieben. Dabei zeigen:
- Fig 1: ein Schienenfahrzeug,
- FIG 3: ein Ersatzschaltbild eines Stromrichters,

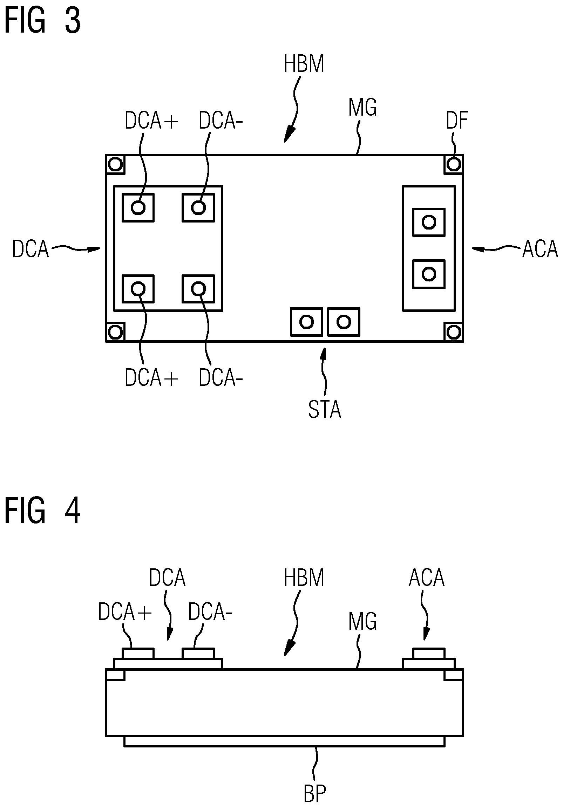

- FIG 3: ein Halbbrückenmodul in einer Draufsicht,
- FIG 4: das Halbbrückenmodul nach FIG 3 in einer Seitenansicht,

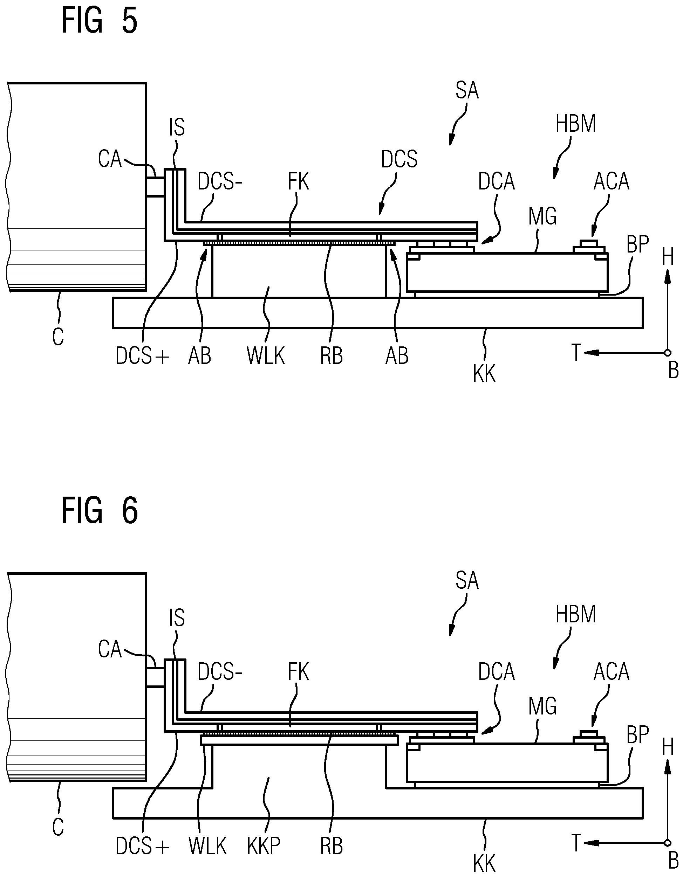

- FIG 5: eine erste Ausführungsform der Schaltungsanordnung in einer Seitenansicht,
- FIG 6: die Schaltungsanordnung der FIG 5 mit einem unterschiedlich ausgestalteten Kühlkörper,

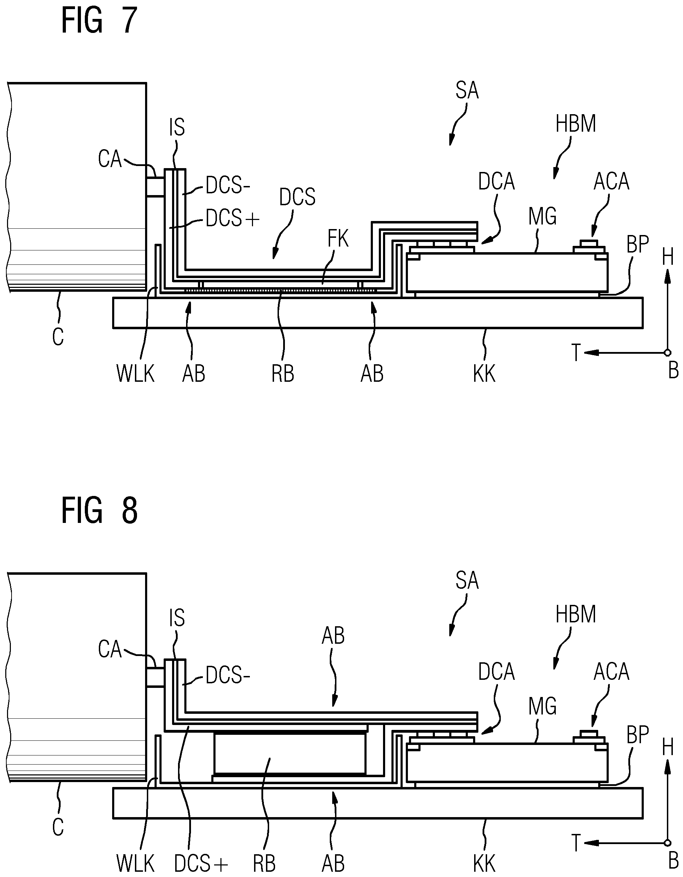

- FIG 7: eine zweite Ausführungsform der Schaltungsanordnung in einer Seitenansicht,
- FIG 8: eine dritte Ausführungsform der Schaltungsanordnung mit einem Scheibenwiderstand in einer Seitenansicht,

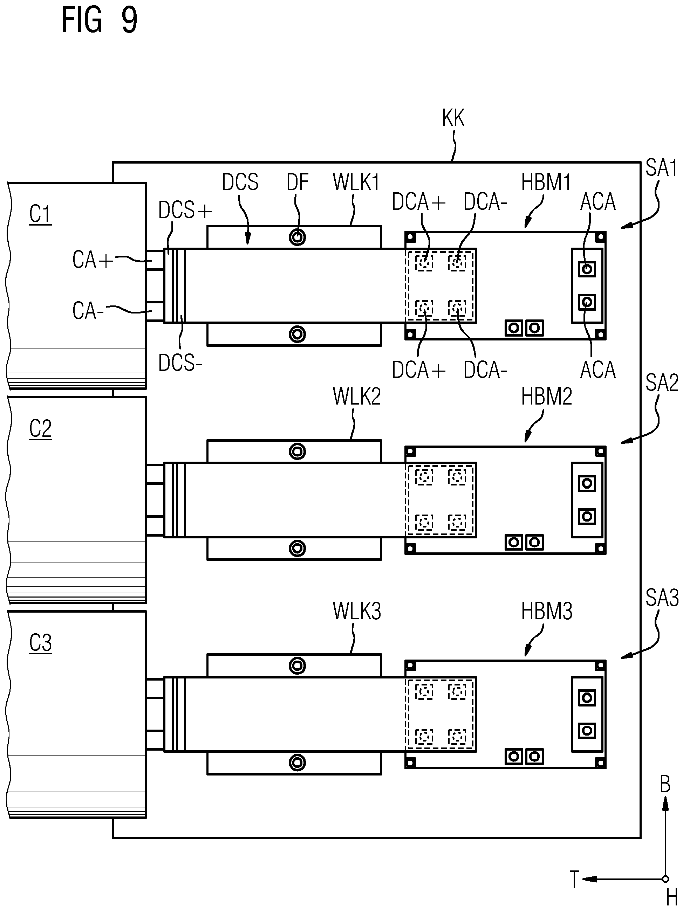

- FIG 9: eine Draufsicht einer Anordnung von drei Schaltungsanordnungen nach der ersten Ausführungsform nebeneinander auf einem gemeinsamen Kühlkörper,

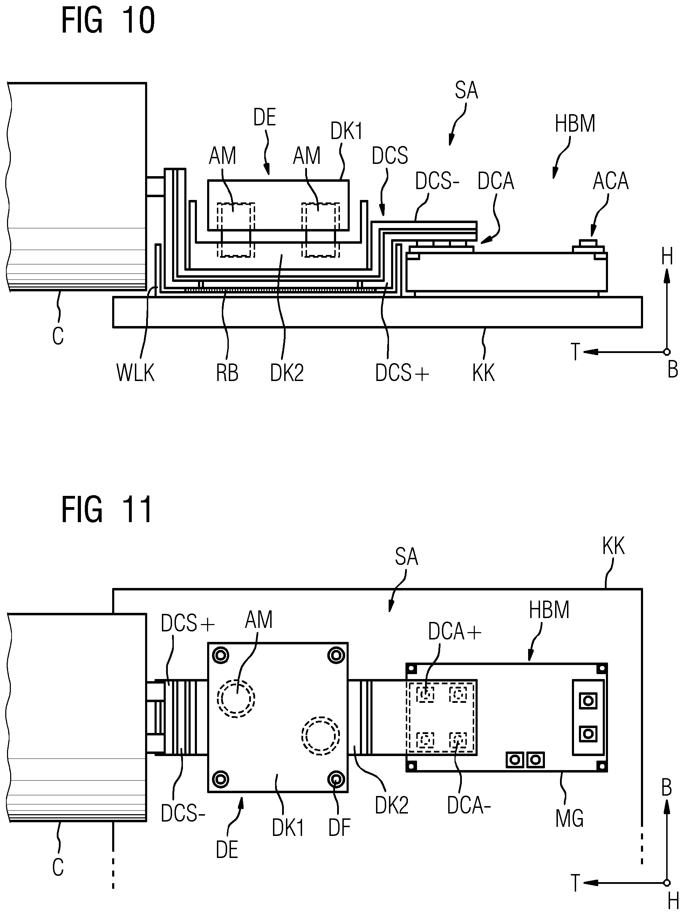

- FIG 10: eine vierte Ausführungsform der Schaltungsanordnung mit einer zusätzlichen Druckeinrichtung in einer Seitenansicht,
- FIG 11: eine Draufsicht der vierten Ausführungsform,

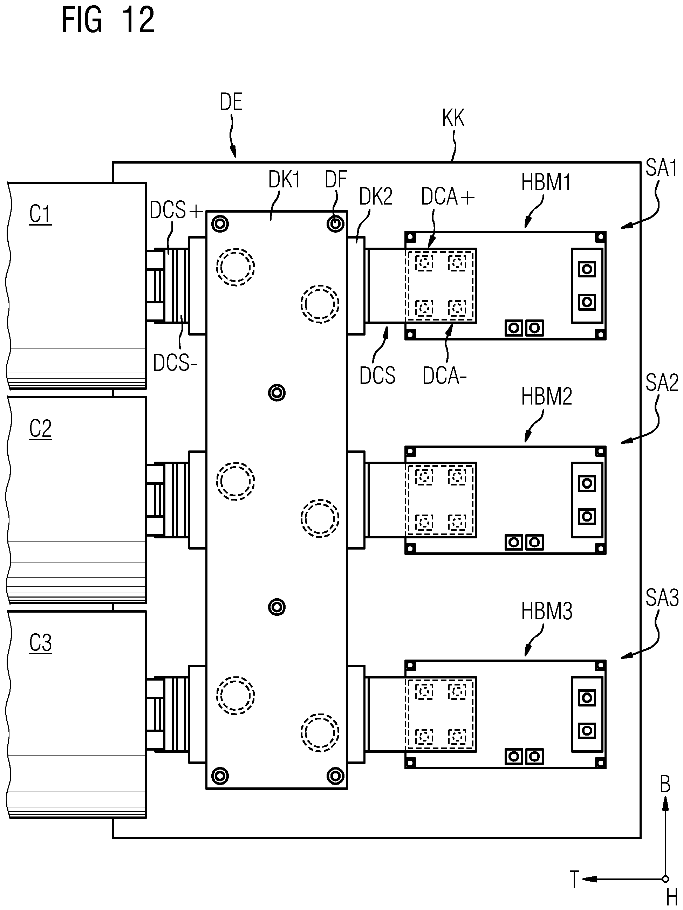

- FIG 12: eine Draufsicht einer Anordnung von drei Schaltungsanordnungen nach der vierten Ausführungsform mit einem die drei Gleichspannungsverschienungen umfassenden ersten Druckkörper, und

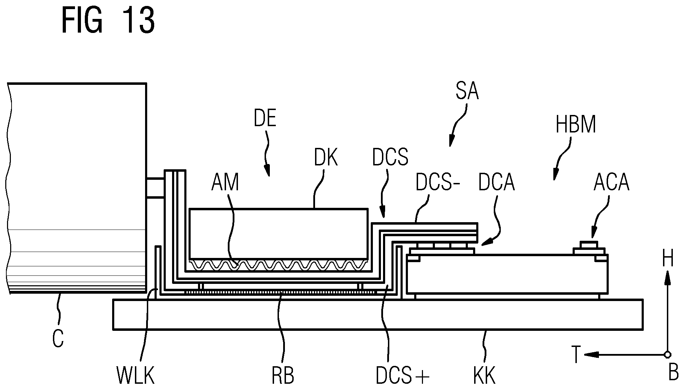

- FIG 13: eine fünfte Ausführungsform der Schaltungsanordnung mit einer zu der vierten Ausführungsform alternativ ausgestalteten Druckeinrichtung.

Aus Gründen der Übersichtlichkeit werden in den Figuren für gleiche bzw. gleich oder nahezu gleich wirkende Komponenten dieselben Bezugszeichen verwendet.

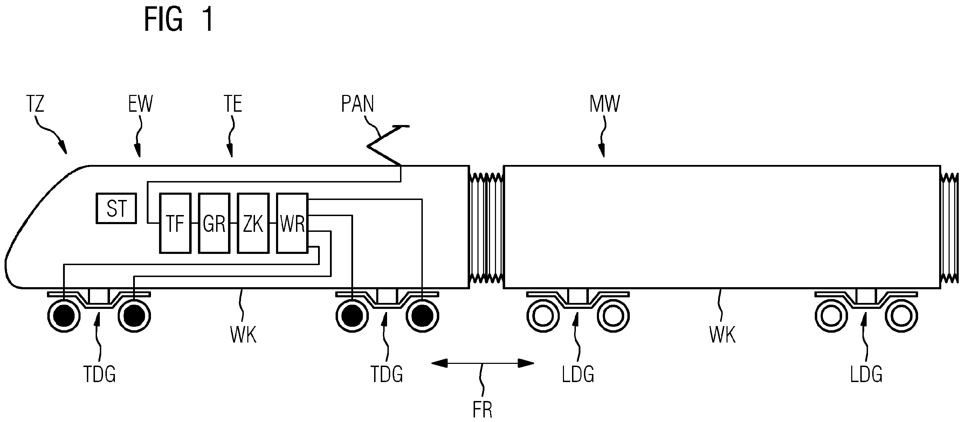

FIG 1 zeigt schematisch ein beispielhaftes Schienenfahrzeug in einer Seitenansicht. Das beispielhaft dargestellte Schienenfahrzeug ist als ein Triebzug TZ für den Personentransport mit einer Mehrzahl Wagen ausgestaltet, wobei lediglich ein Endwagen EW sowie ein mit diesem gekoppelter Mittelwagen MW dargestellt sind. Beide Wagen verfügen über einen Wagenkasten WK mit einem jeweiligen Fahrgastraum, welcher sich über Drehgestelle in Form von Triebdrehgestellen TDG bzw. Laufdrehgestellen LDG auf nicht dargestellten Schienen abstützt.

In dem Endwagen EW sind schematisch Komponenten der Traktionseinrichtung TE eines elektrisch betriebenen Schienenfahrzeugs angegeben. Diese sind üblicherweise in speziellen Bereichen innerhalb des Wagenkastens, im Unterflurbereich, im Dachbereich oder auch verteilt über mehrere Wagen angeordnet. Weitere Komponenten der Traktionseinrichtung, beispielsweise eine Traktionsbatterie, sowie für den Betrieb der Komponenten erforderliche Hilfsbetriebe können ergänzend vorgesehen sein, sind in der FIG 1 jedoch nicht speziell dargestellt.

Über einen im Dachbereich des Endwagens EW angeordneten Stromabnehmer PAN ist die Traktionseinrichtung TE mit einer nicht dargestellten Oberleitung eines Bahnversorgungsnetzes elektrisch verbindbar, wobei die Oberleitung in dem Beispiel eine Einphasenwechselspannung führt. Diese Wechselspannung wird einer netzseitigen Primärwicklung eines Transformators TF zugeführt, in welchem das netzseitige Spannungsniveau von beispielsweise 15kV oder 25kV auf ein für den Zwischenkreis ZK geeignetes Spannungsniveau heruntertransformiert wird. Eine Sekundärwicklung des Transformators TF ist mit einem netzseitigen Stromrichter, beispielsweise ein Gleichrichter GR bzw. Vierquadrantensteller, verbunden, welcher die Wechselspannung gleichrichtet.

Der netzseitige Stromrichter GR speist einen GleichspannungsZwischenkreis ZK, welcher wiederum einen lastseitigen Stromrichter WR, beispielsweise ein Wechselrichter bzw. Pulswechselrichter, gespeist wird. Der Pulswechselrichter generiert aus der Gleichspannung beispielsweise eine Dreiphasenwechselspannung mit variabler Frequenz und Amplitude, mit welcher die dreiphasigen Statorwicklungen von Traktionsmotoren gespeist werden. In dem Beispiel der FIG 1 speist der Wechselrichter WR vier in zwei Triebdrehgestellen TDG des Endwagens EW angeordnete Traktionsmotoren. Gesteuert wird die Funktion insbesondere des netzseitigen GR und des lastseitigen Stromrichters WR in bekannter Weise von einer Steuereinrichtung ST.

Die Oberleitung oder beispielsweise eine dritte Schiene kann alternativ auch eine Gleichspannung führen. In diesem Fall ist der Zwischenkreis ZK der Traktionseinrichtung TE direkt bzw. über einen Netzfilter, welcher eine Drossel und einen Kondensator umfasst, sowie gegebenenfalls einen Gleichspannungswandler speisbar. So genannte Mehrsystemfahrzeuge weisen beispielsweise sowohl einen Stromabnehmer für eine netzseitige Wechselspannungsversorgung als auch einen Stromabnehmer für eine Gleichspannungsversorgung auf, welche entsprechend mit dem Transformator bzw. mit dem Zwischenkreis der Traktionseinrichtung verbunden sind.

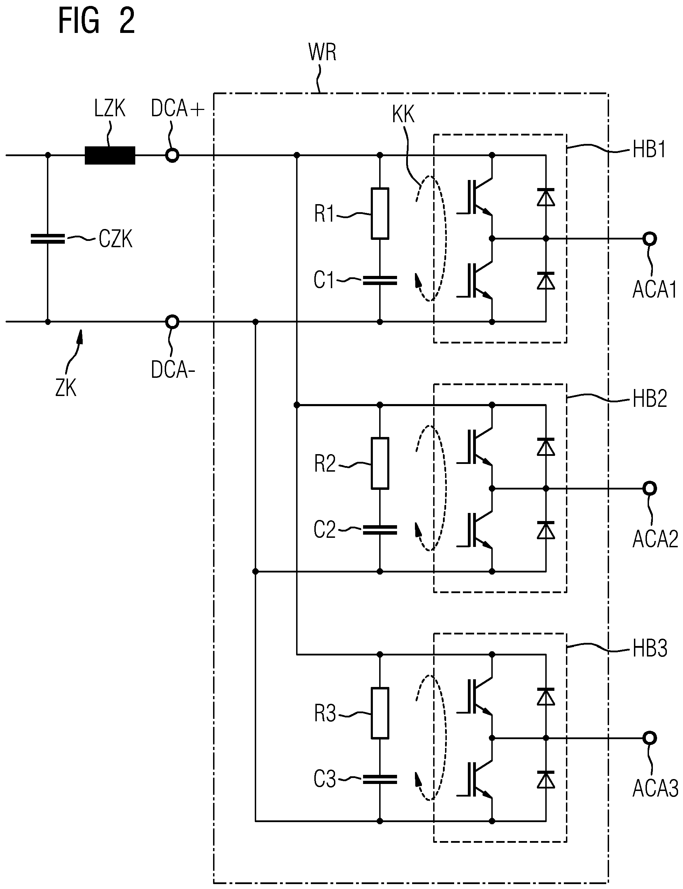

FIG 2 zeigt das Ersatzschaltbild des lastseitigen Wechselrichters WR der FIG 1 als einen beispielhaften Stromrichters. Der Wechselrichter WR ist eingangsseitig über Gleichspannungsanschlüsse DCA+, DCA- mit einem Gleichspannungszwischenkreis ZK sowie ausgangsseitig Wechselspannungsanschlüsse ACA1, ACA2, ACA3 mit drei Phasen von Statorwicklungen eines oder mehrerer Traktionsmotoren verbunden. In dem Zwischenkreis ZK ist beispielhaft ein parallel zu dem Wechselrichter WR geschalteter Zwischenkreiskondensator CZK sowie eine in Serie mit dem Wechselrichter WR geschaltete Zwischenkreisinduktivität LZK vorgesehen. Wie vorstehend beschrieben, ist dieser Zwischenkreiskondensator CZK für den normalen Betrieb der Traktionseinrichtung TE des Schienenfahrzeugs TZ nicht erforderlich, kann jedoch insbesondere für eine ergänzende Stabilisierung der Zwischenkreisspannung bei stark variierendem Spannungsniveau des Versorgungsnetzes vorgesehen werden.

Der Wechselrichter WR weist drei parallel an dem Gleichspannungszwischenkreis ZK geschaltete Halbbrücken HB1, HB2, HB3 auf, welche beispielsweise in einem jeweiligen Halbbrückenmodul HBM, wie es in FIG 3 und 4 dargestellt ist, angeordnet sind. Alternativ zu einem Halbbrückenmodul HBM können in gleicher Weise auch Einzelschaltermodule vorgesehen sein, welche zu einer jeweiligen Halbbrücke verschaltet werden. Jede Halbbrücke HB1, HB2, HB3 umfasst zwei in Serie geschaltete Leistungshalbleiterschalter mit einer jeweils antiparallel geschalteten Freilaufdiode auf, welche eine Rückspeisung von generatorisch generierter Energie der Traktionsmotoren beispielsweise in das Versorgungsnetz oder eine mit dem Gleichspannungszwischenkreis verbundene Traktionsbatterie ermöglichen.

Parallel zu jeder Halbbrücke HB1, HB2, HB3 ist ein jeweiliger Kondensator Cl, C2, C3 mit einem dazu jeweils in Serie geschalteten Widerstand R1, R2, R3 angeordnet. Alternativ zu der darstellten Anordnung des Widerstands, bei welcher dieser mit dem positiven Spannungspotenzial des Gleichspannungszwischenkreises ZK verbunden ist, kann der jeweilige Widerstand auch mit dem negativen Spannungspotenzial bzw. Massepotenzial des Gleichspannungszwischenkreises ZK verbunden sein. Ebenso ist eine Anordnung von zwei Widerständen an beiden Anschlüssen des Kondensators bzw. des Gleichspannungszwischenkreises ZK denkbar. Wie durch die gestrichelte Linie angedeutet, besteht ein Kommutierungskreis KK aus den Leistungshalbleiterschaltern der jeweiligen Halbbrücke HB1, HB2, HB3, sowie dem jeweiligen Kondensator Cl, C2, C3 und dem jeweiligen Widerstand R1, R2, R3.

Weitere, für die Steuerung der Leistungshalbleiterschalter erforderliche elektrische bzw. optische Leitungen und Anschlüsse sind in der FIG 2 nicht speziell dargestellt.

FIG 3 zeigt schematisch ein Halbbrückenmodul HBM in einer Draufsicht und FIG 4 das Halbbrückenmodul HBM in einer Seitenansicht. Dieses ist grundsätzlich entsprechend einem einleitend beschriebenen IHM- oder IHV-Module aufgebaut. Ein solches Halbbrückenmodul HBM weist üblicherweise ein quaderförmiges niederinduktives Gehäuse MG auf, in welchem die Leistungshalbleiterschalter sowie die antiparallel geschalteten Freilaufdioden angeordnet sind. An einer Oberseite des Modulgehäuses sind Gleichspannungsanschlüsse DCA, Wechselspannungsanschlüsse ACA sowie Steueranschlüsse STA angeordnet. Die Gleichspannungsanschlüsse DCA sind im Bereich der einen Stirnseite des Modulgehäuses MG jeweils mehrfach ausgeführt, an welchen jeweils sowohl eine Gleichstromschiene für die elektrische Verbindung mit dem Kondensator als auch eine Gleichstromschiene für die elektrische Verbindung mit dem Gleichspannungszwischenkreis mittels einer Schraubverbindung mechanisch befestigt werden können. Auch der Wechselspannungsanschluss ACA des Halbbrückenmoduls HBM im Bereich der anderen Stirnseite des Modulgehäuses MG ist beispielhaft mehrfach ausgeführt und ermöglicht damit eine mechanische Verbindung mit einer Wechselstromschiene. Ferner sind beispielhaft Steueranschlüsse STA im Bereich einer Längsseite des Modulgehäuses MG angeordnet, an welchen beispielsweise Steuerleitungen zur Ansteuerung der Leistungshalbleiterschalter der Halbbrücke von einer Steuereinrichtung ST mechanisch angeschlossen werden können. Einer mechanischen Befestigung des Modulgehäuses MG an einem Kühlkörper mittels beispielsweise Schraubverbindungen dienen vier Durchführungen DF in den Eckbereichen des Modulgehäuses MG. Das Modulgehäuse MG weist zudem an der Unterseite eine Bodenplatte BP auf, welche mit dem Kühlkörper thermisch verbunden wird, um aufgrund von Schaltverlusten der Leistungshalbleiterschalter während des Betriebs des Halbbrückenmoduls HBM entstehende Wärme aus dem Modulgehäuse MG abzuführen.

FIG 5 zeigt eine erste beispielhafte Ausführungsform einer Schaltungsanordnung SA in einer Seitenansicht. Das Halbbrückenmodul HBM entsprechend der FIG 3 und 4 ist an der ebenen Oberseite eines Kühlkörpers KK angeordnet und mit diesem über die Bodenplatte BP des Modulgehäuses MG thermisch verbunden. Der Kühlkörper KK ist aus einem Aluminiummaterial, insbesondere als ein Strangpressprofil, gefertigt und kann beispielsweise ergänzend nicht speziell dargestellte Kühlfinnen an der Unterseite oder auch Kühlkanäle im Innern aufweisen. Eine Höhe H des Kühlkörpers KK ist beispielsweise derart bemessen, dass dieser sowohl eine hohe mechanische Stabilität als auch eine hinreichende Wärmekapazität aufweist. Der Kühlkörper KK weist ferner eine Breite B auf, welche die Anordnung mehrerer Halbbrückenmodule HBM, beispielsweise zumindest drei Halbbrückenmodule HBM entsprechend einem Wechselrichter WR nach der FIG 2, nebeneinander an der Oberseite ermöglicht. In der Tiefe T reicht der Kühlkörper KK über das Halbbrückenmodul HBM hinaus. Im Bereich der dem Halbbrückenmodul HBM gegenüberliegenden Seite des Kühlkörpers KK ist ein Kondensator C angeordnet, welcher beispielsweise über eine nicht speziell dargestellte Halterung an dem Kühlkörper KK befestigt ist, wobei eine thermische Kopplung mit dem Kühlkörper KK nicht erforderlich ist. Der Kondensator C weist beispielsweise ein zylindrisches Gehäuse auf, an dessen einen Stirnseite zwei Kondensatoranschlüsse CA angeordnet sind.

Die Gleichspannungsanschlüsse DCA des Halbbrückenmoduls HBM sind über eine niederinduktive Gleichspannungsverschienung DCS mit den Kondensatoranschlüssen CA verbunden. Die Verschienung umfasst dabei zwei parallel geführte flächige Stromschienen DCS-, DCS+ aus einem Kupfermaterial mit einer jeweiligen Dicke, welche durch eine Isolierungsschicht IS, beispielsweise eine Folie oder auch eine geeignete Lackschicht elektrisch voneinander isoliert sind. Eine erste der beiden Stromschienen DCS- ist dabei mit den ersten Gleichspannungsanschlüssen DCA- des Halbbrückenmoduls HBM verbunden, während die zweite Stromschiene DCS+ mit den zweiten Gleichspannungsanschlüssen DCA+ des Halbbrückenmoduls HBM verbunden ist. Die ersten Gleichspannungsschlüsse DCAsind während des Betriebs der Schaltungsanordnung SA bzw. des Wechselrichters entsprechend dem Ersatzschaltbild der FIG 2 auf einem negativen Spannungsniveau DC- des Zwischenkreises ZK, die zweiten Gleichspannungsanschlüsse DCA+ entsprechend auf einem positiven Spannungsniveau DC+ des Zwischenkreises ZK.

In der ersten Ausführungsform sowie in den weiteren Ausführungsformen ist der Kondensator C jeweils liegend angeordnet, wobei die Kondensatoranschlüsse CA in Richtung des Halbbrückenmoduls HBM weisen. Da die Gleichspannungsanschlüsse DCA des Halbbrückenmoduls HMB hingegen an der Oberseite des Modulgehäuses MG angeordnet sind, ist die Gleichspannungsverschienung DCS im Bereich der Kondensatoranschlüsse CA beispielhaft abgewinkelt, wobei im Übergang zwischen der, in der Darstellung, horizontalen Ebene in die vertikale Ebene ein bestimmter Radius vorgesehen werden kann. Die Gleichspannungsverschienung DCS weist in dieser Ausführungsform somit ein L-förmiges Profil auf. Eine zu der Darstellung unterschiedliche Anordnung des Kondensators C ist in gleicher Weise möglich, beispielsweise derart, dass die Kondensatoranschlüsse CA in der gleichen Ebene wie die Gleichspannungsanschlüsse DCA des Halbbrückenmoduls HBM angeordnet sind.

Die Stromschienen DCS-, DCS+ sind mit den Gleichspannungsanschlüssen DCA-, DCA+ sowie den Kondensatoranschlüssen CA beispielsweise jeweils mittels einer Schraubverbindung mechanisch verbunden, wobei diese Schraubverbindungen nicht speziell dargestellt sind. Hierzu weisen die Anschlüsse beispielsweise jeweils ein Schraubgewinde auf. Entsprechend sind auch eine weitere Gleichspannungsverschienung für die Verbindung mit dem Gleichspannungszwischenkreis mit den weiteren Gleichspannungsanschlüssen DCA des Halbbrückenmoduls HBM sowie eine weitere Stromschiene mit den Wechselspannungsanschlüssen ACA des Halbbrückenmoduls HBM mechanisch mittels einer jeweiligen Schraubverbindung verbunden, wobei diese ebenfalls nicht speziell dargestellt sind. Die weitere Gleichspannungsverschienung kann dabei beispielsweise oberhalb der Gleichspannungsverschienung DCS angeordnet und insbesondere von dieser beabstandet sowie elektrisch isoliert sein, jedoch zusammen mit der Gleichspannungsverschienung an den Gleichspannungsanschlüssen DCA des Halbbrückenmoduls HBM mechanisch befestigt sein.

Die zweite Stromschiene DCS+ der Gleichspannungsverschienung DCS ist in zwei Längenabschnitte unterteilt, wobei ein erster Längenabschnitt in einem ersten Endbereich mit den zweiten Gleichspannungsanschlüssen DCA+ des Halbbrückenmoduls verbunden ist, während der zweite Längenabschnitt in einem ersten Endbereich mit einem zweiten Kondensatoranschluss CA+ verbunden ist. Die zweiten Endbereiche der beiden Längenabschnitte sind zueinander beabstandet. Im Bereich dieses Abstands ist ein Widerstand RB in Form eines flächigen Blechs angeordnet. Das Widerstandsblech RB ist beispielsweise aus einem Edelstahlmaterial gefertigt und weist eine gegenüber der zweiten Stromschiene DCS+ identische Breite jedoch eine geringere Dicke auf. Edelstahl eignet sich in besonderer Weise als Dämpfungswiderstand, da es einen gegenüber Kupfer höheren elektrischen Widerstand aufweist sowie bei hinreichender Wärmekapazität einer adiabatischen Erwärmung standhält. Im Bereich der Enden weist das Widerstandsblech RB einen jeweiligen Anschlussbereich auf, welche mit entsprechenden Anschlussbereichen AB der ersten und zweiten Längenabschnitte der zweiten Stromschiene DCS+ in deren jeweiligen zweiten Endbereichen verbunden werden. Die jeweiligen Anschlussbereiche AB der Längenabschnitte und des Widerstandsblechs RB können sich dabei, wie dargestellt, überlappen und im Bereich der jeweiligen Überlappung mittels eines bekannten Fügeverfahrens, beispielsweise durch Löten oder Schweißen, mechanisch miteinander verbunden werden, sodass eine dauerhaft stabile elektrische Verbindung hergestellt wird.

Das Widerstandsblech RB ist beispielhaft einlagig ausgeführt. Alternativ kann es jedoch ebenfalls ein- oder mehrfach gefalzt sein, wodurch eine größere Länge und entsprechend ein höherer elektrischer Widerstand erzielbar ist. Die aufgrund der Falzung aneinander liegenden Abschnitte des Widerstandsblechs können in diesem Fall beispielsweise im Bereich des durch den Abstand zwischen den Längenabschnitten der zweiten Stromschiene DCS+ entstandenen Raums angeordnet sein. Die Abschnitte müssen entsprechend voneinander elektrisch isoliert sein, was wiederum mittels einer jeweiligen Isolierungsschicht aus einer Folie oder einer Lackschicht erfolgen kann.

Der Raum zwischen den zweiten Endbereichen der beiden Längenabschnitte der zweiten Stromschiene DCS+ ist bei dem beispielhaft einlagig ausgeführten Widerstandsblech RB grundsätzlich nicht ausgefüllt. Um eine Wölbung des Widerstandsblechs RB in den Raum zu vermeiden sowie einen mechanischen Druck auf das Widerstandsblech RB bzw. der Gleichspannungsverschienung DCS in Richtung des Kühlkörpers KK ausüben zu können, ist in dem Raum ein Füllkörper FK aus einem Polymer-Material, beispielsweise einem Duroplast, angeordnet. Dieses Material ist elektrisch isolierend jedoch thermisch leitend und weist eine hohe mechanische Stabilität auch bei Erwärmung auf.

Der mechanische Druck in Richtung des Kühlkörpers KK dient dazu, das Widerstandsblech RB über eine große Fläche homogen auf einem Wärmeleitkörper WLK aufliegt, um eine großflächige thermische Kopplung mit diesem herzustellen und damit eine effiziente Entwärmung des Widerstandsblechs RB in den Kühlkörper KK zu ermöglichen, wodurch eine Kurzschlussfestigkeit des Widerstandsblechs RB erzielt werden kann. Der Wärmeleitkörper WLK ist räumlich zwischen dem Widerstandsblech RB und dem Kühlkörper KK angeordnet und weist eine an die Abmaße des Widerstandsblechs RB angepasste jeweilige Breite und Tiefe auf. Entsprechend dem Füllkörper FK ist der Wärmeleitkörper WLK aus einem Polymer-Material, beispielsweise einem Duroplast, gefertigt, wobei auch hier die speziellen Eigenschaften eines Duroplast vorteilhaft genutzt werden.

FIG 6 zeigt die Schaltungsanordnung SA der FIG 5 mit unterschiedlich ausgestalteten Kühlkörper KK und Wärmeleitkörper WLK. Der Kühlkörper KK weist dabei im Bereich des Widerstandsblechs RB bzw. des Wärmeleitkörpers WLK eine größere Höhe H im Vergleich zu der umliegenden Oberseite des Kühlkörpers KK, insbesondere zu dem Bereich der Oberseite, in dem die Halbbrückenmodule HBM angeordnet sind, auf und bildet damit ein Kühlkörperpodest KKP aus. Bei einer Fertigung des Kühlkörpers KK als ein Strangpressprofil aus einem Aluminiummaterial kann eine solche Erhöhung, entsprechend beispielsweise Kühlfinnen an der Unterseite, in einfacher Weise durch eine Anpassung der Profilform ausgebildet werden, wobei sich die Erhöhung dann über die gesamte Breite B des Kühlkörpers KK erstreckt. Vorteilhaft kann mittels des Kühlkörperpodests KKP gegenüber einem voluminösen Wärmeleitkörper WLK aus Duroplast entsprechend der FIG 5 aufgrund einer besseren thermischen Leitfähigkeit des Aluminiummaterials die Wärmeabfuhr aus dem Widerstandsblech RB effizienter gestaltet werden, wobei aufgrund des größeren Volumens ebenfalls die Wärmekapazität des Kühlkörpers KK weiter erhöht wird. Zwischen dem Kühlkörperpodest KKP und dem Widerstandsblech RB ist weiterhin ein Wärmeleitkörper WLK vorgesehen, welcher das Widerstandsblech RB bzw. die Gleichspannungsverschienung DCS gegenüber dem Kühlkörper KK elektrisch isoliert, um ein Überschlagen von Hochspannungsimpulsen in den Kühlkörper KK zu verhindern, und das Widerstandsblech RB thermisch mit dem Kühlkörper KK koppelt. Dieser Wärmeleitkörper WLK kann eine deutlich geringere Höhe und beispielsweise eine Form ähnlich dem Füllkörper FK aufweisen. Ferner kann der Wärmeleitkörper WLK beispielsweise mittels einer Schraubverbindung an dem Kühlkörperpodest KKP mechanisch befestigt sein.

FIG 7 zeigt eine zweite beispielhafte Ausführungsform einer Schaltungsanordnung SA in einer Seitenansicht. Im Unterschied zu der vorstehend beschriebenen ersten Ausführungsform weist die Gleichspannungsverschienung DCS ausgehend von dem Halbbrückenmodul HBM ein U-bzw. wannenförmiges Profil auf, wobei die Stromschienen DCS-, DCS+ im Bereich des Abstands zwischen dem Halbbrückenmodul HBM und dem Kondensator C über eine bestimmte Tiefe T nahe der Oberseite des Kühlkörpers KK bzw. in einer geringeren Höhe H zu diesem geführt sind. Der Wärmeleitkörper WLK kann hierdurch entsprechend der Ausgestaltung in der FIG 6 eine geringere Höhe H aufweisen, wodurch die Wärmeabfuhr in den Kühlkörper KK wiederum gegenüber der Ausgestaltung in der FIG 5 effizienter gestaltet wird. Der Wärmeleitkörper WLK weist entsprechend der Gleichspannungsverschienung DCS beispielsweise ebenfalls ein U- bzw. wannenförmiges Profil auf, um ergänzend zu dem Widerstandsblech RB auch die zweite Stromschiene DCS+ gegenüber dem Kühlkörper KK elektrisch zu isolieren.

FIG 8 zeigt eine dritte beispielhafte Ausführungsform einer Schaltungsanordnung SA in einer Seitenansicht. In dieser dritten Ausführungsform ist anstelle eines Widerstandsblechs RB entsprechend den FIG 5, 6 und 7 ein Scheibenwiderstand RS in der zweiten Stromschiene DCS+ angeordnet. Ein Scheibenwiderstand RS weist beispielsweise einen zylindrischen Körper aus einem Keramik-Material auf, dessen Stirnseiten jeweils mit einer Schicht aus einem Aluminium-Material für eine elektrische Kontaktierung versehen sind. Bei einer liegenden Anordnung des Scheibenwiderstands RS entsprechend der Darstellung in FIG 8 erfolgt die Kontaktierung der Stirnseiten mit den zweiten Endbereichen der beiden Längenabschnitte der zweiten Stromschiene DCS+ oberhalb bzw. unterhalb des Scheibenwiderstands RS. Hierzu ist beispielhaft der mit dem Halbleitermodul HBM verbundene Längenabschnitt der zweiten Stromschiene DCS+ ähnlich der Ausführungsform der FIG 7 über eine bestimmte Länge im Bereich der Oberseite des Kühlkörpers KK geführt, während der mit dem Kondensator C verbundene Längenabschnitt der zweiten Stromschiene DCS+ ähnlich der Ausführungsform der FIG 5 bzw. FIG 6 über eine bestimmte Länge parallel zu der ersten Stromschiene DCS- geführt ist. Die Längenabschnitte sind somit in Richtung der Tiefe des Kühlkörpers KK über eine bestimmte Länge in einem Abstand parallel zueinander geführt. Eine Entwärmung des Scheibenwiderstands RS in den Kühlkörper KK erfolgt über den einen Längenabschnitt der zweiten Stromschiene DCS+, welcher über einen Wärmeleitkörper WLK mit dem Kühlkörper KK thermisch verbunden, jedoch elektrisch isoliert ist.

FIG 9 zeigt eine Draufsicht einer Anordnung von drei Schaltungsanordnungen SA1, SA2, SA3 entsprechend der FIG 5 nebeneinander auf einem gemeinsamen Kühlkörper KK. Zusammen mit nicht dargestellten weiteren Stromschienen für eine jeweilige Verbindung der Gleichspannungsanschlüsse DCA+, DCAder Halbbrückenmodule HBM1, HBM2, HBM3 mit dem Gleichspannungszwischenkreis ZK sowie einer jeweiligen Verbindung der Wechselspannungsanschlüsse ACA der Halbbrückenmodule HBM1, HBM2, HBM3 mit beispielsweise einer jeweiligen Phase einer Statorwicklung eines Traktionsmotors entspricht diese Anordnung dem grundsätzlichen Aufbau eines Wechselrichters WR nach dem Ersatzschaltbild der FIG 2.

Die Darstellung der FIG 9 offenbart nicht speziell, dass die jeweilige erste Stromschiene DCS- der Gleichspannungsverschienung DCS im Bereich der Gleichspannungsanschlüsse DCA+ des jeweiligen Halbbrückenmoduls HBM sowie des Gleichspannungsanschlusses CA+ des jeweiligen Kondensators C ausgeschnitten ist, um eine Kontaktierung der jeweiligen zweiten Stromschiene DCS+ mit diesen Anschlüssen zu ermöglichen. In gleicher Weise ist die jeweilige zweite Stromschiene DCS+ im Bereich der Gleichspannungsanschlüsse DCA- des jeweiligen Halbbrückenmoduls HBM sowie des Gleichspannungsanschlusses CA- des jeweiligen Kondensators ausgeschnitten, sodass die jeweilige erste Stromschiene DCS- in diesen Bereichen mit den jeweiligen Anschlüssen kontaktiert werden kann. Ferner ist der erste Wärmeleitkörper WLK1 mit Durchführungen DF versehen, über welche er beispielsweise mittels einer Schraubverbindung an dem Kühlkörper KK befestigt werden können. Die beiden weiteren dargestellten Schaltungsanordnungen SA2, SA3 sind entsprechend der beschriebenen ersten Schaltungsanordnung SA1 ausgestaltet.

FIG 10 zeigt eine vierte beispielhafte Ausführungsform der Schaltungsanordnung SA in einer Seitenansicht. Diese basiert auf der zweiten Ausführungsform der FIG 7 und weist ergänzend eine Druckeinrichtung DE auf, mittels welcher ein höherer mechanischer Druck in Richtung des Kühlkörpers KK generiert wird, um eine sichere und dauerhafte großflächige thermische Kopplung des Widerstandsblechs RB mit dem Wärmeleitkörper WLK zu gewährleisten. Vorteilhaft entlastet diese Druckeinrichtung DE die Gleichspannungsanschlüsse DCA, CA des Halbbrückenmoduls HBM und des Kondensators C, welche nach der Ausführungsform der FIG 7 maßgeblich den Druck in Richtung des Kühlkörpers KK ausüben.

Die Druckeinrichtung DE umfasst beispielhaft einen ersten Druckkörper DK1, einen zweiten Druckkörper DK2 sowie zwischen dem ersten DK1 und zweiten Druckkörper DK2 angeordnete Ausgleichsmittel AM. Der in der Darstellung untere zweite Druckkörper DK2 weist ähnlich dem Wärmeleitkörper WLK beispielsweise ein U- bzw. wannenförmiges Profil auf und ist dem Profil der Gleichspannungsverschienung DCS angepasst. Auch eine Breite des zweiten Druckkörpers DK2 kann beispielsweise an die Breite der Gleichspannungsverschienung DCS angepasst sein. Alternativ kann der zweite Druckkörper DK2 beispielsweise eine ebene Oberseite sowie eine gegenüber der Gleichspannungsverschienung DCS größere Breite aufweisen, wobei in den Überstandbereichen in Richtung des Kühlkörpers KK ragende Seitenwände ausgebildet sind, welche die Stromschienen DCS-, DCS+ sowie insbesondere das Widerstandsblech RD und den Wärmeleitkörper WLK umfassen und damit die einzelnen mechanisch nicht fest miteinander verbundenen Schichten seitlich stabilisieren. Der zweite Druckkörper DK2 ist beispielsweise wiederum aus einem Polymer-Material, insbesondere aus einem Duroplast, hergestellt.

An seiner Oberseite weist der zweite Druckkörper DK2 beispielsweise zwei zylindrische Ausnehmungen auf, in denen ein erstes Ende eines jeweiligen Ausgleichsmittels AM ortsfest angeordnet bzw. gelagert ist. Die Ausgleichsmittel AM dienen einer homogenen Verteilung des von dem ersten Druckkörper DK1 ausgeübten Drucks auf den zweiten Druckkörper DK2, wodurch gegebenenfalls existierende Toleranzen in der Anordnung der Gleichspannungsverschienung DCS gegenüber dem ersten Druckkörper DK1 ausgeglichen werden können. Als Ausgleichsmittel AM eignen sich verschiedene Arten von Federn wie insbesondere Spiralfedern oder Tellerfedern, welche üblicherweise aus einem Metall hergestellt und ergänzend mit einem Kunststoff beschichtet sind, oder auch Blockfedern aus einem Elastomer-Material.

Der erste Druckkörper DK1 weist ebenfalls zwei den zylindrischen Ausnehmungen des zweiten Druckkörpers DK2 gegenüberliegende zylindrische Ausnehmungen auf, in denen ein zweites Ende des jeweiligen Ausgleichsmittels AM angeordnet bzw. gelagert ist. Gefertigt ist der erste Druckkörper DK1 beispielsweise ebenfalls aus einem Polymer-Material, insbesondere aus einem Duroplast. Alternativ kann dieser jedoch beispielsweise aus einem Metall, insbesondere als ein Strangpressprofil aus einem Aluminium-Material, gefertigt sein, welches eine hohe und dauerhafte mechanische Stabilität aufweist, wobei die zylindrischen Ausnehmungen ergänzend in dem Material mittels eines spanenden Bearbeitungsverfahrens gebildet werden. Befestigt ist der erste Druckkörper DK1 beispielsweise stationär an dem Kühlkörper KK, wodurch eine stabile Lage sichergestellt ist.

Eine solche Befestigung des ersten Druckkörpers DK1 an dem Kühlkörper KK ist in FIG 11 beispielhaft dargestellt. Die FIG 11 zeigt dabei die Schaltungsanordnung der FIG 10 in einer Draufsicht, aus welcher auch die beispielhaft gewählte Anordnung der zylindrischen Ausnehmungen bzw. der Ausgleichsmittel AM in dem ersten Druckkörper DK1 ersichtlich ist. Ebenfalls ist verdeutlicht, dass der erste Druckkörper DK1 die Gleichspannungsverschienung DCS jeweils in der Breite überragt und in den Überstandbereichen jeweilige Durchführungen DF aufweist, welche einer Befestigung des ersten Druckkörpers DK1 an der Kühlplatte KK beispielsweise mittels einer jeweiligen Schraubverbindung dienen.

FIG 12 zeigt eine Draufsicht einer Anordnung von drei Schaltungsanordnungen SA1, SA2, SA3 entsprechend der FIG 10 nebeneinander auf einem gemeinsamen Kühlkörper KK. Der jeweilige zweite Druckkörper DK2 weist gegenüber der Ausgestaltung der FIG 10 eine ebene Oberseite sowie eine gegenüber der Gleichspannungsverschienung DCS größere Breite mit in Richtung des Kühlkörpers KK ragenden Seitenwänden auf, welche die Stromschienen DCS-, DCS+ sowie insbesondere das Widerstandsblech RD und den Wärmeleitkörper WLK seitlich umfassen. Entsprechend der FIG 9 bilden die drei Schaltungsanordnungen SA1, SA2, SA3 zusammen mit weiteren nicht dargestellten Stromschienen einen Wechselrichter WR aus. Der erste Druckkörper DK1 erstreckt sich über die Gleichspannungsverschienungen DCS aller drei Schaltungsanordnungen SA1, SA2, SA3. Entsprechend ist der erste Druckkörper DK1 beispielsweise in den Endbereichen an dem Kühlkörper mechanisch befestigt sowie, sofern erforderlich, ergänzend in den Bereichen zwischen den Schaltungsanordnungen bzw. Gleichspannungsverschienungen DCS.

FIG 13 zeigt schließlich eine fünfte beispielhafte Ausführungsform der Schaltungsanordnung SA in einer Seitenansicht. Diese basiert wiederum auf der zweiten Ausführungsform der FIG 7 und unterscheidet sich von der vierten Ausführungsform der FIG 10 durch eine unterschiedlich ausgestaltete Druckeinrichtung DE. Die Druckeinrichtung besteht dabei einen einzigen, beispielhaft blockartigen Druckkörper DK, an dessen ebenen Unterseite eine Wellenfeder als ein Ausgleichsmittel AM angeordnet ist, welche eine homogene Verteilung des mechanischen Drucks auf die Gleichspannungsverschienung DCS sicherstellt. Vorzugsweise erstreckt sich die Wellenfeder in der Tiefe T über eine wesentliche Länge innerhalb des U- bzw. wannenförmigen Profils der Gleichspannungsverschienung DCS sowie über die gesamte Breite der Gleichspannungsverschienung DCS. Die Wellenfeder ist beispielsweise aus einem Metall gefertigt, während der Druckkörper DK aus einem elektrisch isolierenden Material, beispielsweise aus einem Polymer-Material, insbesondere aus einem Duroplast, hergestellt ist. Der Druckkörper DK kann sich entsprechend FIG 11 und FIG 12 über eine oder mehrere Gleichspannungsverschienungen DCS erstrecken und ist mechanisch an dem Kühlkörper KK befestigt. Ebenso kann der Druckkörper DK eine gegenüber der Gleichspannungsverschienung DCS größere Breite mit in Richtung des Kühlkörpers KK ragenden Seitenwänden aufweisen, welche zumindest die Wellenfeder sowie gegebenenfalls ergänzend die Stromschienen DCS-, DCS+ sowie das Widerstandsblech RD und den Wärmeleitkörper WLK seitlich umfassen.

### Bezugszeichenliste

- AB: Anschlussbereich
- ACA: Wechselspannungsanschluss
- AM: Ausgleichsmittel
- B: Breite
- BP: Bodenplatte
- C: Kondensator
- CA: Kondensatoranschluss
- CZK: Zwischenkreiskondensator
- DCA: Gleichspannungsanschluss
- DCS: Gleichspannungsverschienung
- DCS+, DCS-: Stromschiene
- DE: Druckeinrichtung
- DF: Durchführung
- DK: Druckkörper
- EW: Endwagen
- FK: Füllkörper
- FR: Fahrtrichtung
- GR: Gleichrichter
- H: Höhe
- HB: Halbbrücke
- HBM: Halbleitermodul
- IS: Isolierschicht
- KK: Kühlkörper
- KKP: Kühlkörperpodest
- LDG: Laufdrehgestell
- LZK: Zwischenkreisinduktivität
- MG: Modulgehäuse
- MW: Mittelwagen
- PAN: Stromabnehmer
- R: Widerstand
- RB: Widerstandsblech
- RS: Scheibenwiderstand
- SA: Schaltungsanordnung
- ST: Steuereinrichtung
- T: Tiefe
- TDG: Triebdrehgestell
- TE: Traktionseinrichtung
- TF: Transformator
- TZ: Schienenfahrzeug
- WK: Wagenkasten
- WLK: Wärmeleitkörper
- WR: Wechselrichter
- ZK: Zwischenkreis

## Patentansprüche

1. Schaltungsanordnung (SA) für einen Stromrichter (WR), wobei die Schaltungsanordnung (SA) aufweist:
- zumindest eine Halbbrücke (HB) mit jeweils zwei in Serie geschalteten Leistungshalbleiterschaltern, wobei die Halbbrücke (HB) zumindest ein Modul (HBM) mit jeweils zumindest einem Leistungshalbleiterschalter aufweist, und wobei die Halbbrücke (HB) einen ersten Gleichspannungsanschluss (DCA+), einen zweiten Gleichspannungsanschluss (DCA-) und einen Wechselspannungsanschluss (ACA) aufweist,
- einen Kondensator (C), welcher parallel zu der Halbbrücke (HB) geschaltet ist und einen ersten Kondensatoranschluss (CA+) und einen zweiten Kondensatoranschluss (CA-) aufweist, und
- zumindest eine erste Stromschiene (DCS+), welche den ersten Gleichspannungsanschluss (DCA+) mit dem ersten Kondensatoranschluss (CA+) verbindet, und zumindest eine zweite Stromschiene (DCS-), welche den zweiten Gleichspannungsanschluss (DCA-) mit dem zweiten Kondensatoranschluss (CA-) verbindet, wobei die erste und die zweite Stromschiene (DCS+, DCS-) räumlich parallel geführt und elektrisch voneinander isoliert sind,
**dadurch gekennzeichnet, dass**
die Schaltungsanordnung (SA) ferner zumindest einen mit dem Kondensator (C) in Serie geschalteten Widerstand (R) aufweist, wobei der zumindest eine Widerstand (R, RB, RS) in der ersten und/oder der zweiten Stromschiene (DCS+) angeordnet ist.

2. Schaltungsanordnung (SA) nach Patentanspruch 1,
**dadurch gekennzeichnet, dass**
der zumindest eine Widerstand (R, RB, RS) gegenüber der Stromschiene, in welcher er angeordnet ist:
- aus einem unterschiedlichen Material gefertigt ist, und/oder
- eine in zumindest einem Teilbereich unterschiedliche Breite und/oder Dicke aufweist, und/oder
- eine unterschiedliche Form aufweist.

3. Schaltungsanordnung (SA) nach Patentanspruch 1 oder 2,
**dadurch gekennzeichnet, dass**
die Stromschiene (DCS+), in welcher der Widerstand (R, RB, RS) angeordnet ist, in einen ersten und einen zweiten Längenabschnitt unterteilt ist, wobei der erste Stromschienenabschnitt in einem ersten Endbereich mit dem Gleichspannungsanschluss (DCA+) der Halbbrücke (HB) verbunden ist und der zweite Stromschienenabschnitt in einem ersten Endbereich mit dem Kondensatoranschluss (CA+) verbunden ist, und wobei der erste und der zweite Stromschienenabschnitt in einem jeweiligen zweiten Endbereich einen Anschlussbereich (AB) aufweisen, an welchen sie mit einem jeweiligen Anschlussbereich des Widerstands (R, RB, RS) verbunden sind.

4. Schaltungsanordnung (SA) nach einem der vorstehenden Patentansprüche,
**dadurch gekennzeichnet, dass**
der zumindest eine Widerstand (R, RB, RS) thermisch mit einem Kühlkörper (KK) gekoppelt ist, wobei der Kühlkörper (KK) insbesondere einer Kühlung des zumindest einen Moduls (HBM) dient.

5. Schaltungsanordnung (SA) nach Patentanspruch 4,
**dadurch gekennzeichnet, dass**
die thermische Kopplung des zumindest einen Widerstands (R, RB, RS) mit dem Kühlkörper (KK) mittels einer mechanischen Krafteinwirkung im Bereich des Widerstands (RB) auf einer dem Kühlkörper (KK) abgewandten Seite des Widerstands (RB) erfolgt.

6. Stromrichter (WR), zumindest aufweisend:
- einen Gleichspannungszwischenkreis (ZK), und
- zumindest eine Schaltungsanordnung (SA) nach einem der Patentansprüche 1 bis 5.

7. Stromrichter nach Patentanspruch 6,
**dadurch gekennzeichnet, dass**
im Betrieb des Stromrichters (WR)
- an dem ersten Gleichspannungsanschluss (DCA+) der Halbbrücke (HB) und der ersten Stromschiene (DCS+) ein erstes Spannungspotenzial des Gleichspannungszwischenkreises anliegt, und
- an dem zweiten Gleichspannungsanschluss (DCA-) der Halbbrücke (HB) und der zweiten Stromschiene (DCS-) ein zweites Spannungspotenzial des Gleichspannungszwischenkreises (ZK) anliegt,
wobei der erste Gleichspannungsanschluss (DCA+) und der zweite Gleichspannungsanschluss (DCA-) der Halbbrücke (HB) über eine jeweilige weitere Stromschiene mit dem Gleichspannungszwischenkreis (ZK) verbunden sind.

8. Stromrichter (WR) nach Patentanspruch 6 oder 7, ferner aufweisend:
zumindest drei Schaltungsanordnungen (SA1, SA2, SA3), wobei die ersten und zweiten Wechselspannungsanschlüsse (DCA+, DCA-) der Halbbrücken (HB) jeweils parallelgeschaltet sind, und wobei die Module (HBM) der Halbbrücken (HB) insbesondere auf einem gemeinsamen Kühlkörper (KK) angeordnet sind.

9. Fahrzeug, insbesondere Schienenfahrzeug (TZ), aufweisend zumindest einen Stromrichter (WR) nach einem der Patentansprüche 6 bis 8.
